# EUROPEAN PATENT APPLICATION

(11) **EP 2 139 012 A1**
(43) Date of publication of application: **30.12.2009**
(21) Application number: 08738848.4
(22) Date of filing: 25.03.2008
(51) Int. Cl.: H01H 1/023, C25D 5/12, C25D 7/00, H01H 1/04, H01R 13/03, H01R 43/16

(54) **SILVER-COATED MATERIAL FOR MOVABLE CONTACT COMPONENT AND METHOD FOR MANUFACTURING SUCH SILVER-COATED MATERIAL**

(30) Priority: 27.03.2007 JP 2007082604; 24.03.2008 JP 2008076884
(71) Applicant: The Furukawa Electric Co., Ltd., Chiyoda-ku Tokyo 100-8322 (JP)
(72) Inventor: YAMAGUCHI, Suguru, Tokyo 100-8322 (JP); KOBAYASHI, Yoshiaki, Tokyo 100-8322 (JP)
(74) Representative: Kleimann, Tobias
(86) International application number: PCT/JP2008/055603
(87) International publication number: WO 2008/123259

(57) **Abstract**

A silver-coated material for a movable contact component includes an electrically conductive base member (1) that is comprised of copper or a copper alloy; an underlayer (2) that is comprised of nickel or a nickel alloy, and that has a thickness between 0.01 µm and 0.5 µm to coat on the electrically conductive base member; an intermediate layer (3) that is comprised of palladium, or a palladium alloy, or a silver tin alloy, and that has a thickness between 0.01 µm and 0.5 µm to coat on the underlayer; and an outermost surface layer (4) that is comprised of silver or a silver alloy, and that is formed on the intermediate layer.

## Description

### TECHNICAL FIELD

The present invention relates to a silver-coated material for a movable contact component and a method for manufacturing the silver-coated material.

### BACKGROUND ART

Conventionally, a material, in which silver is plated on an electrically conductive base member with superior spring property formed of a copper apply such as phosphor bronze, beryllium copper and the like, or a Corson alloy in recent years, or an iron alloy such as a stainless steel, has been used for a push switch of a portable telephone, a portable peripheral device, or the like.
In the conventional material, an underlayer of nickel is formed onto the electrically conductive base member, in particular an alloy of iron based such as the stainless steel or the like, and then a surface plating of silver is directly plated thereon. While, there has been increasing the number of repetition of a switching operation in accordance with a popularization of the electronic mail function on the portable telephones. Accordingly, heat tends to be generated at a switching part due to the switching in a short period of time, thereby making it easy to peel off due to oxygen through the plating of silver and oxidization of nickel.

In order to prevent the phenomenon, there have been proposed a silver/copper/nickel/stainless material in which a copper intermediate layer is provided between a silver layer and a nickel layer (see Patent Documents 1 through 3). The copper intermediate layer is said to capture oxygen transmitted through the silver plating, thereby preventing oxidization of the underlayer nickel.
[Patent Document 1] Japanese Patent No. 3889718
[Patent Document 2] Japanese Patent No. 3772240
[Patent Document 3] Japanese Patent Application Publication No. 2005-133169

### DISCLOSURE OF THE INVENTION

The material for an electric contact component disclosed in patent documents, however, has the electrically conductive base member formed of stainless steel. Accordingly, it is difficult to apply to a material for an electric contact component including a conductive base member formed of copper or a copper different from stainless steel. That is to say, in order to use an electrically conductive base member formed of copper or a copper alloy for a movable contact such as a switch, it is predictable that a condition such as a thickness of a coating layer or the like is different from that in a case that the electrically conductive base member is formed of stainless steel. Patent documents do not disclose the condition.

When the intermediate layer of copper is disposed, it becomes able to prevent oxidation of the underlayer. Further, mutual diffusion occurs between copper and nickel, and between copper and silver, thereby improving adherence between the layers, and peeling withstanding property of the coating layer. However, in a case where the intermediate layer has an excessive thickness, copper of the intermediate layer tends to diffuse to the surface layer, thereby increasing a contact resistance due to the oxidation thereof. Further, in a case where the intermediate layer has a too small thickness, the intermediate layer does not sufficiently capture oxygen, thereby peeling off a silver layer on a surface of a substance due to a reputation of a switching operation or the like. That is, it is difficult to properly design the thickness of the intermediate layer, and control a manufacturing condition.
In the material for the electric contact component, it is not able to determine a variety of properties from patent documents when copper or the copper alloy is used for the electrically conductive base member. It is necessary to reexamine the structure of the coating layer and the like, thereby optimizing a material for a movable contact component.

According to the present invention, the following aspects are provided.
1. According to a first aspect of the present invention, a silver-coated material for a movable contact component comprises: an electrically conductive base member comprised of copper or a copper alloy; an underlayer comprised of nickel or a nickel alloy, and having a thickness between 0.01 µm and 0.5 µm to coat on the electrically conductive base member; an intermediate layer comprised of palladium, a palladium alloy, or a silver tin alloy, and having a thickness between 0.01 µm and 0.5 µm to coat on the underlayer; and an outermost surface layer comprised of silver or a silver alloy, and formed on the intermediate layer.
2. According to a second aspect of the present invention, the silver-coated material for the movable contact component in the first aspect, the palladium alloy in the intermediate layer includes gold palladium, silver palladium, tin palladium, nickel palladium, or indium palladium.
3. According to a third aspect of the present invention, a silver-coated material for a movable contact component comprises: an electrically conductive base member comprised of copper or a copper alloy; an intermediate layer comprised of palladium, a palladium alloy, or a silver tin alloy, and that having a thickness between 0.01 µm and 0.5 µm to coat on the electrically conductive base member; and an outermost surface layer comprised of silver or a silver alloy, and formed on the intermediate layer.
4. According to a fourth aspect of the present invention, a method for manufacturing the silver-coated material for the movable contact component in the first or the second aspect comprises the steps of: coating nickel or a nickel alloy onto the electrically conductive base member; performing an activation process; forming the intermediate layer to coat thereon; and forming a layer comprised of silver or a silver alloy to coat thereon.
5. According to a fifth aspect of the present invention, a method for manufacturing the silver-coated material for the movable contact component in the third aspect comprises the steps of: performing an activation process on the electrically conductive base member; forming the intermediate layer to coat thereon; and forming a layer comprised of silver or a silver alloy to coat thereon.

The above and other aspects and advantages of the present invention will be further clarified by the following description in reference to the drawings.

### BRIEF DESCRIPTION OF THE DRAWINGS

FIG. 1 is a drawing of longitudinal section showing one embodiment in accordance with the present invention.
FIG. 2 is a drawing of longitudinal section showing another embodiment in accordance with the present invention.

### BEST MODE FOR CARRYING OUT THE INVENTION

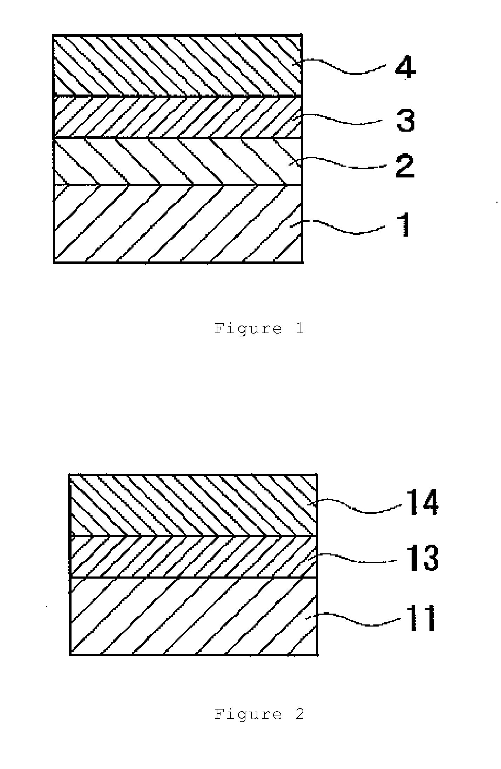

Hereinafter an embodiment in accordance with the present invention will be described in detailed below, in reference to the following drawings. FIG. 1 is a sectional drawing for showing the embodiment regarding a silver-coated material for a movable contact component in accordance with the present invention. Here in accordance with FIG. 1, the number (1) designates an electrically conductive base member that is comprised of copper or a copper alloy; the number (2) designates an underlayer that is comprised of nickel (Ni) or a Ni alloy; the number (3) designates an intermediate layer that is comprised of palladium (Pd), or a Pd alloy, or of a silver tin alloy (Ag-Sn); and the number (4) designates an outermost surface layer that is comprised of silver or a silver alloy.

Moreover, the electrically conductive base member (1) has the electrical conductivity, a characteristic of spring, a durability, or the like, sufficient to be used for the movable contact component, and the same is comprised of copper or the copper alloy in accordance with the present invention.
Further, regarding a copper alloy to be made use as preferred for the base material (1), there is given an example of such as a beryllium copper (Cu-Be), a phosphor bronze, a brass, a nickel silver, a Corson alloy, or the like.
Still further, it is desirable for the base material (1) to have a thickness between 0.03 µm and 0.3 µm, or it is further preferable to be as between 0.05 µm and 0.1 µm.

The underlayer (2) covers a surface of the base material (1). The underlayer 2 has a thickness between 0.01 µm and 0.5 µm, more preferably between 0.05 µm and 0.1 µm, and is comprised of nickel (Ni) or the nickel alloy.
Still further, regarding the Ni alloy to be made use for the underlayer (2), it is able to make use of an alloy of such as a Ni-P system, a Ni-Sn system, a Ni-Co system, a Ni-Co-P system, a Ni-Cu system, a Ni-Cr system, a Ni-Zn system, a Ni-Fe system, or the like as preferred thereto. Still further, regarding such Ni or the Ni alloy in particular, there is a property of plating treatment as excellently with making use thereof, there is not any problem from a material cost point of view, and there is less losing of a barrier function even under an environment at a higher temperature because the same has a melting point as higher respectively. Still further, because the base material (1) is comprised of copper or the copper alloy, there may become one of factors that cause a peeling of silver off from the outermost surface layer (4) due to diffusion of copper from the base material (1). However, in accordance with the present embodiment, the underlayer (2) is designed to prevent from the diffusion of copper from the base material (1), and hence it becomes difficult to peel silver of the outermost surface layer (4) therefrom. And then a lower limit regarding a thickness of the underlayer (2) should be determined from a point of view of preventing from the diffusion of copper from the base material (1). Still further, an upper limit regarding the thickness of the underlayer (2) should be determined from a point of view of preventing from worsening a workability of the coated material at a period of forming an electric contact material with making use of the coated material by making use of such as a press working or the like, and then from a point of view of preventing from a probability of happening a crack on such as the underlayer (2) or the like.

Still further, it is designed to coat the intermediate layer (3) onto the underlayer (2) with having a thickness between 0.01 µm and 0.5 µm, or with having the same thereof as it is further preferable to be as between 0.05 µm and 0.2 µm, that is comprised of palladium (Pd), or the palladium alloy, or of the silver tin alloy. And then in a case where there is designed to make use of palladium or the palladium alloy for the intermediate layer (3), it may become to be worsened the workability if the thickness thereof becomes thicker due to a hardness of the material as higher, and hence there may become easier to happen a crack thereon. Therefore, in the case where there is designed to make use of palladium or the palladium alloy for the intermediate layer (3), it is desirable for the thickness to be as not thicker than 0.2 µm. Still further, a lower limit regarding the thickness of the intermediate layer (3) should be determined from a point of view of preventing from an oxidation of any elements in the underlayer (2) on the contrary thereto.
Palladium, a palladium alloy, or a silver tin alloy is more difficult to be oxidized comparing to copper. Accordingly, it is more difficult to lower adherence of the layer from a silver layer or from a layer of the silver alloy as the outermost surface layer (4) due to an oxidation of an upper face of the intermediate layer (3), and also there becomes more difficult to happen a decreasing of the electrical conductivity (contact resistance) thereof due to a coming out of any elements from the intermediate layer (3) and then due to an oxidation of the element, as comparing to a material in which there is performed to form an intermediate layer with making use of copper.

Still further, regarding the palladium alloy to be made use for the intermediate layer (3), it is desirable to make use of such as gold palladium alloy (Pd-Au), silver palladium alloy (Pd-Ag), tin palladium alloy (Pd-Sn), indium palladium alloy (a Pd-In), or the like.
Still further, it becomes able to design for palladium (Pd) to become more difficult to diffuse by performing to be alloyed. And hence there becomes more difficult to happen a worsening of adherence of the layer from the silver layer or from the silver alloy layer, and there becomes more difficult to happen a decreasing of the electrical conductivity (contact resistance) thereof as well, due to a further coming out of any elements from the intermediate layer (3) to the outermost surface layer (4) and then due to the oxidation of the element.
Still further, by making use of the silver tin alloy for the intermediate layer (3) it becomes more difficult to diffuse the elements as similar to that in the case of making use of palladium. And hence there becomes more difficult to happen a worsening of adherence of the layer from the silver layer or from the silver alloy layer, and there becomes more difficult to happen a decreasing of the electrical conductivity (contact resistance) thereof due to a further coming out of any elements from the intermediate layer (3) to the outermost surface layer (4) and then due to the oxidation of the element.

Still further, it is designed to form the outermost surface layer (4) that is comprised of silver (Ag) or the silver alloy onto the intermediate layer (3). And then there is designed for the outermost surface layer (4) that is comprised of silver (Ag) or the silver alloy to be provided in order to improve an electrical conductivity as the contact material. And hence it is desirable for a thickness thereof to be as between 0.5 µm and 3.0 µm, or it is further preferable to be as between 1.0 µm and 2.0 µm.
Still further, there may be able to give an example of two components system as it is able to make use the same as preferred to the outermost surface layer (4), such as a silver tin alloy, a silver nickel alloy, a silver copper alloy, silver palladium alloy, or the like, or of an alloy of multi components system by combining together with the elements.

Still further, it is able to coat and to form the underlayer (2), the intermediate layer (3) and the outermost surface layer (4) in the above mentioned silver-coated material for the movable contact component by making use of such as the plating method, a physical vapor deposition (PVD) method, or the like. However, it is further preferable to coat and form the same by making use of a wet plating method on the contrary thereto, as it is more convenient and lower manufacturing cost.

It is able to form the silver-coated material for the movable contact component in accordance with the present embodiment as shown in reference to FIG. 1 by such as the following processes of: performing a preparation of such as an electrolytic degreasing or the like for the electrically conductive base member; coating nickel or a nickel alloy (underlayer) by plating with making use of nickel or of the nickel alloy; performing a process of activation; forming an intermediate layer to coat thereon by plating of palladium, or by plating of a palladium alloy, or plating of a silver tin alloy; then forming a layer to coat silver thereon by plating of silver or by plating of a silver alloy; and the like.

Next, FIG. 2 is a sectional drawing for showing another embodiment regarding the silver-coated material for the movable contact component in accordance with the present invention. Here in accordance with FIG. 2, the number (11) designates an electrically conductive base member that is comprised of copper or a copper alloy; the number (13) designates an intermediate layer that is comprised of palladium (Pd), or a palladium (Pd) alloy, or of a silver tin alloy (Ag-Sn) ; and the number (14) designates an outermost surface layer that is comprised of silver or a silver alloy.
Moreover, regarding the thickness of the electrically conductive base member (11), of the intermediate layer (13) and of the outermost surface layer (14), and regarding the other aspects to be preferred for each thereof, it is similar to that for each of the above mentioned electrically conductive base member (1), the intermediate layer (3) and the outermost surface layer (4) respectively.

Further, it is able to form the silver-coated material for the movable contact component in accordance with the present embodiment as shown in FIG. 2 by the following processes of: performing a process of activation for an electrically conductive base member; forming an intermediate layer to coat thereon by plating of palladium, or plating of a palladium alloy, or plating of a silver tin alloy, without coating nickel or a nickel alloy thereon beforehand; then forming a layer to coat silver thereon by plating of silver or plating of a silver alloy; and the like.

Thus, it becomes able to provide the silver-coated material for the movable contact component and the method for manufacturing the silver-coated material in accordance with the present invention, without happening any peeling of the silver layer off from the surface thereof, but with relaxing the limit regarding the manufacturing, even in a case where the same is made use under the environment of such as the repetition of switching or the like.

Moreover, the silver-coated material for the movable contact component in accordance with the present invention becomes to be applicable as preferred to such as a connector, a switch, a terminal, a coned disc spring material for an electronic contact material, or the like. Furthermore, the silver-coated material for the movable contact component in accordance with the present invention becomes to be superior in withstanding property of peeling the coating layer off.

Still further, there is designed to form the metal (alloy) layer as the intermediate layer in accordance with the present invention that is more difficult to be oxidized, with making use of copper or the copper alloy as the electrically conductive base member in the silver-coated material for the movable contact component. And hence it becomes able to suppress the worsening of the adherence between the intermediate layer and the outermost surface layer (silver layer) due to the oxidation of the intermediate layer. Still further, it becomes able to suppress the decreasing in electrical conductivity thereof, and it becomes able to suppress the worsening the adherence between the intermediate layer and the outermost surface layer, due to the diffusion of such as any of the elements from the intermediate layer, any of the oxidized substance of the elements therefrom, or the like, to the outermost surface layer (silver layer), because there is designed for the silver layer to be formed as the metal (alloy) layer that is more difficult to diffuse therefrom. Furthermore, it becomes able to obtain an advantage as well, that a yield rate regarding the manufacturing the material becomes to be improved as well, because there becomes to be relaxed thereby the conditions of manufacturing the intermediate layer. Examples

Next, the present invention will be described in further detail below in reference to the following examples, however, the present invention will not be limited to any one of the examples.

### (Examples 1 to 8)

There is performed the processes for a plate material of beryllium copper (Be-Cu: C17530) which has a thickness of 0.25 mm approximately and has a plate width of 100 mm approximately described in detail below, and the silver-coated materials with the layer structures as shown in Table 1 are obtained.
1. Preparation: there is performed for each of the materials to be soaked in a mixed liquor of sulfuric acid as 4% and sodium dichromate as 200 grams per liter at a room temperature with an amount of time for between one minute and three minutes, and then thereafter there is performed to be cathodic degreased (50°C, 2 A/dm2).
2. Underplating of nickel: there is performed under a condition of an electric current density in the cathode as 2 A/dm2 with making use of a plating solution of nickel chloride as five grams per liter and free hydrochloric acid as 30%, and then there becomes to be formed an underlayer.
3. Activation: there is performed for a Cu-Be bar after the underplating of nickel by being held in a warm water or a hot water of a temperature as between 40°C and 90°C with an amount of time for not shorter than three seconds. Moreover, there is designed to be controlled the temperature of the Be-Cu bar in a period of between the electrolytic degreasing and the activation by soaking the Be-Cu bar at an inside of a water washing vessel with controlling the temperature thereof by making use of a heat sink.
4. Plating of Pd for an intermediate layer: there is performed thereon under a condition of an electric current density in the cathode as 5 A/dm2 with making use of a plating solution which contains palladium sulfate as 100 grams per liter and afree hydrochloric acid as 20 grams per liter, and then there becomes to be formed an intermediate layer.
5. Plating of Pd-Au or Pd-Ag for another intermediate layer: there is performed thereon under a condition of an electric current density in the cathode as 5 A/dm2 with making use of a plating solution which contains palladium sulfate as 100 grams per liter, a metal salt of gold or silver as 30 grams per liter respectively, and free hydrochloric acid as 20 grams per liter.
6. Strike plating of silver: there is performed thereon under a condition of an electric current density in the cathode as 2 A/dm2 with making use of a plating solution which contains silver cyanide as five grams per liter and potassium cyanide as 50 grams per liter.
7. Plating of silver: there is performed thereon under a condition of an electric current density in the cathode as 5 A/dm2 with a plating solution which contains silver cyanide as 50 grams per liter, potassium cyanide as 50 grams per liter and potassium carbonate as 30 grams per liter. [0024] Moreover, there may be performed either one of the above mentioned process number 4 or the above mentioned process number 5 for the intermediate layer regarding the plating for each of the layers in accordance with Examples 1 to 8. Further, there is designed to be performed the strike plating of silver as the above mentioned process number 6 if required in order to enhance the adherence of the plating of silver thereon as above mentioned process number 7. And then there is designed the plating to have a range of the thickness as between 0.01 µm and 0.05 µm in accordance with the present embodiment. However, it may be available to be as between 0.005 µm and 0.1 µm in practice on the contrary thereto. A thickness of the outermost surface layer is defined as a sum of the thickness of the plating at the process of the process number 6 and the thickness of the plating at the process of the process number 7.

### (Examples 9 to 30)

There is performed a process of degreasing (soaking in a solution of NaOH as 60 grams per liter with an amount of time for thirty seconds approximately) and a process of acid cleaning (soaking in a solution of sulfuric acid as 10% with an amount of time for another thirty seconds approximately) for the plate materials of brass (Cu-Zn: C2680), phosphor bronze (Cu-Sn-P: C5210), nickel silver (Cu-Ni-Zn: C7701) and a tough pitch copper (pure copper system: C1100), that individually have the thickness of 0.25 millimeter approximately and individually have the plate width of 100 mm approximately, there are performed the processes as the numbers from 2 through 7 in accordance with Examples 1 to 8, and then there becomes to be obtained the silver-coated materials that individually have the layer structures as shown in Table 1. Moreover, the points as different from that in accordance with Examples 1 to 8 is that the plating for an intermediate layer is designed to be selected from the following process numbers 8 and 9 in addition to the above mentioned process numbers 4 and 5, and that the plating for the outermost surface layer is designed to be performed with corresponding to a type that is selected from the process number 7 or from the following process number 9 after performing the plating at the process number 6.
8. Plating of Pd-Sn or Pd-Ni or Pd-In for an intermediate layer: there is performed thereon under a condition of an electric current density in the cathode as 5 A/dm2 with making use of a plating solution which contains palladium sulfate as 100 grams per liter, a metal salt of tin or of nickel or of indium as 30 grams per liter respectively, and free hydrochloric acid as 20 grams per liter.
9. Another intermediate layer or an outermost surface layer (Ag-Sn): there is performed thereon under a condition of an electric current density in the cathode as 5 A/dm2 with making use of a plating solution which contains silver cyanide as 50 grams per liter, potassium cyanide as 50 grams per liter, potassium carbonate as 30 grams per liter and the metal salt of tin as 30 grams per liter.

Here in accordance with the above mentioned process number 9, it is designed for the constituent elements of the plating solution to be common for between the plating for the intermediate layer and the plating for the outermost surface layer, however, this is just one example. And then it is able to modify properly the constituent elements within a range for silver to be the principal constituent. Moreover, it may be available for both of the plating for the intermediate layer and the plating for the outermost surface layer to be designed as a plating of silver and of tin as well. However, it is required in the case thereof that it should be designed to be performed the strike plating of silver with making use of the plating solution at the above mentioned process number 6 for therebetween, in order to design properly each of the thickness thereof respectively (in particular to prevent the thickness of the intermediate layer from forming beyond the upper limit thereof). Furthermore, it becomes able to obtain not only the adherence as stronger at between the plating for the intermediate layer and the plating for the outermost surface layer, but also it becomes able to suppress the occurring any crack in the intermediate layer, by performing the strike plating of silver for therebetween.

### (Comparative examples 1 to 4)

There is performed a plating of Cu under a condition of an electric current density in a cathode as 5 A/dm2 with making use of a plating solution which contains copper sulfate as 150 grams per liter and free sulfuric acid as 100 grams per liter, with all of the other conditions thereof as similar to that in accordance with Examples 1 to 8, and then there becomes to be obtained the silver-coated materials as shown in Table 1. Moreover, there is not performed any plating for an intermediate layer in accordance with Comparative example 3. Furthermore, there is not performed any plating of nickel for an underlayer in accordance with Comparative example 4 and not performed any plating for an intermediate layer either.

### (Test examples)

There is performed an examination on the adherence of the plating by performing a peeling test for each of the obtained silver-coated materials in accordance with Examples and Comparative examples after heating at a temperature of 400°C approximately with an amount of time for between five minutes and fifteen minutes in an atmospheric environment respectively. Moreover, there is performed the peeling test as pursuant to the JIS-K-5600-5-6 (crosscut method). Furthermore, there are shown the obtained results in Table 1.

**(Table 1)**

| EXAMPLES | BASE MATERIAL | UNDERLAYER | | INTERMEDIATE LAYER | | OUTERMOST SURFACE LAYER | | WHETHER OR NOT EXIST PEELING AFTER HEATING | | |
|---|---|---|---|---|---|---|---|---|---|---|
| | | TYPE | THICKNESS (µm) | TYPE | THICKNESS (µm) | TYPE | THICKNESS (µm) | FOR FIVE MINUTES | FOR TEN MINUTES | FOR FIFTEEN |
| 1 | C17539 | Ni | 0.01 | Pd | 0.01 | Ag | 1 | NONE | NONE | NONE |
| 2 | C17539 | Ni | 0.05 | Pd | 0.1 | Ag | 1 | NONE | NONE | NONE |
| 3 | C17530 | Ni | 0.01 | Pd | 0.3 | Ag | t | NONE | NONE | NONE |
| 4 | C17530 | Ni | 0.1 | Pd | 0.1 | Ag | 1 | NONE | NONE | NONE |
| 5 | C17530 | Ni | 0.2 | Pd | 0.2 | Ag | t | NONE | NONE | NONE |
| 6 | C17530 | Ni | 0.5 | Pd | 0.3 | Ag | 1 | NONE | NONE | NONE |
| 7 | C17530 | Ni | 0.2 | Pd-Au | 0.1 | Ag | 1 | NONE | NONE | NONE |
| 9 | C17530 | Ni | 0.2 | Pd-As | 0.2 | Ag | 1 | NONE | NONE | NONE |
| 8 | C2680 | Ni | 0.01 | Pd | 0.01 | Ag | 1 | NONE | NONE | NONE |
| 10 | C2680 | Ni | 0.05 | Pd | 0.3 | Ag | 1 | NONE | NONE | NONE |
| 11 | C2680 | Ni | 0.1 | Pd | 0.1 | Ag | 1 | NONE | NONE | NONE |
| 12 | C2680 | Ni | 0.2 | Pd | 0.2 | Ag | 1 | NONE | NONE | NONE |
| 13 | C5210 | Ni | 0.01 | Pd-Au | 0.01 | Ag | 1 | NONE | NONE | NONE |
| 14 | C5210 | Ni | 0.1 | Pd-Ag | 0.05 | Ag | 1 | NONE | NONE | NONE |
| 15 | C5210 | Ni | 0.05 | Pd-Ag | 0.01 | Ag | 1 | NONE | NONE | NONE |
| 16 | C5210 | Ni | 0.05 | Pd-Ag | 0.01 | Ag | 1 | NONE | NONE | NONE |
| 17 | C5210 | Ni | 0.05 | Pd-Sn | 0.01 | Ag | 1 | NONE | NONE | NONE |
| 18 | C5210 | Ni | 0.05 | Pd-Ni | 0.01 | Ag | 1 | NONE | NONE | NONE |
| 19 | C5210 | Ni | 0.05 | Pd-In | 0.01 | Ag | 1 | NONE | NONE | NONE |
| 20 | C5210 | Ni | 0.01 | Ag-Sn | 0.01 | Ag | 1 | NONE | NONE | NONE |
| 21 | C5210 | Ni | 0.01 | Ag-Sn | 0.05 | Ag | 1 | NONE | NONE | NONE |
| 22 | C5210 | Ni | 0.05 | Ag-Sn | 0.01 | Ag | 1 | NONE | NONE | NONE |
| 23 | C7701 | Ni | 0.05 | Pd | 0.01 | Ag-Sn | 1 | NONE | NONE | NONE |
| 24 | C7701 | Ni | 0.1 | Pd | 0.1 | Ag-Sn | 1 | NONE | NONE | NONE |
| 25 | C7701 | Ni | 0.05 | Pd | 0.01 | Ag | 0.5 | NONE | NONE | NONE |
| 26 | C7701 | Ni | 0.1 | Pd | 0.1 | Ag | 2 | NONE | NONE | NONE |
| 27 | C7701 | Ni | 0.2 | Pd | 0.05 | Ag | 0.5 | NONE | NONE | NONE |
| 28 | C7701 | Ni | 0.05 | Pd | 0.1 | Ag | 2 | NONE | NONE | NONE |
| 29 | C1100 | Ni | 0.05 | Pd | 0.01 | Ag | 1 | NONE | NONE | NONE |
| 30 | C1100 | Ni | 0.05 | Pd | 0.01 | Ag | 1 | NONE | NONE | NONE |

| COMPARATIVE EXAMPLE | | | | | | | | | | |
|---|---|---|---|---|---|---|---|---|---|---|
| 1 | C17530 | Ni | 0.05 | Gu | 0.05 | Ag | 1 | NONE | EXIST | EXIST |
| 2 | C17530 | Ni | 0.1 | Gu | 0.1 | Ag | 1 | NONE | EXIST | EXIST |
| 3 | C17530 | Ni | 0.1 | NOME | NONE | Ag | 1 | NONE | EXIST | EXIST |
| 4 | C17530 | NOME | NOME | NOME | NONE | Ag | 1 | EXIST | EXIST | EXIST |

As shown in Table 1, there becomes to be occurred the peeling on each of the materials in accordance with Comparative examples 1 to 4 after elapsing the amount of time of ten minutes. And in particular regarding the material in accordance with Comparative example 4, there becomes to be occurred the peeling thereon even after elapsing the amount of time of only five minutes.
On the contrary thereto there is not occurred any of the peeling on each of Examples 1 to 30 even after elapsing the amount of time of fifteen minutes, and hence it becomes able to obtain all thereof as to be superior in the withstanding property of peeling regarding the individual outermost surface layers respectively.
Thus, it becomes clear that there are obtained the following advantages regarding the silver-coated material for the movable contact component in accordance with the present invention:
1. it becomes able to suppress the worsening of the adherence between the intermediate layer and the silver layer thereon due to the oxidation of the intermediate layer;
2. it becomes able to suppress the decreasing of the electrical conductivity (the increasing of the contact resistance) thereof due to the diffusion of such as any of the elements from the intermediate layer, any of the oxidized substance of the elements, or the like, to the silver layer, and also it becomes able to suppress the worsening of the adherence between the intermediate layer and the outermost surface layer thereon due thereto either; and
3. it becomes able to relax the conditions of manufacturing the intermediate layer, and hence it becomes able to improve the yield rate regarding the manufacturing the silver-coated material.

### INDUSTRIAL APPLICABILITY

The silver-coated material for the movable contact component in accordance with the present invention becomes to be applicable as preferred to such as a connector, a switch, a terminal, a coned disc spring material for an electronic contact material, or the like.

The present invention is described in reference to the embodiment, and will not be limited to every detail of the description as far as a particular designation, and it should be interpreted widely without departing from scope of the present invention as disclosed in the attached claims.

The application claims the priority based on Japanese Patent Application No. 2007-082604, that is patent applied in Japan on the twenty-seventh day of March 2007, and on Japanese Patent Application No. 2008-076884, that is patent applied in Japan on the twenty-fourth day of March 2008, and the entire contents of which are expressly incorporated herein by reference.

## Claims

1. A silver-coated material for a movable contact component, comprising:
an electrically conductive base member formed of copper or a copper alloy;
an underlayer covering the electrically conductive base member, said underlayer being formed of nickel or a nickel alloy and having a thickness between 0.01 µm and 0.5 µm;
an intermediate layer covering the underlayer, said intermediate layer being formed of palladium, a palladium alloy, or a silver tin alloy, and having a thickness between 0.01 µm and 0.5 µm; and
an outermost surface layer formed on the intermediate layer and formed of silver or a silver alloy.

2. The silver-coated material for the movable contact component according to claim 1, wherein said intermediate layer is formed of the palladium alloy including gold palladium, silver palladium, tin palladium, nickel palladium, or indium palladium.

3. A silver-coated material for a movable contact component, comprising:
an electrically conductive base member formed of copper or a copper alloy;
an intermediate layer covering the electrically conductive base member, said intermediate layer being formed of palladium, a palladium alloy, or a silver tin alloy, and having a thickness between 0.01 µm and 0.5 µm; and
an outermost surface layer formed on the intermediate layer and formed of silver or a silver alloy.

4. A method for manufacturing the silver-coated material for the movable contact component according to claim 1 or 2, comprising the steps of:
coating nickel or the nickel alloy on the electrically conductive base member;
performing an activation process;
coating the intermediate layer; and
coating silver or the silver alloy.

5. A method for manufacturing the silver-coated material for the movable contact component according to claim 3, comprising the steps of:
performing an activation process on the electrically conductive base member;
coating the intermediate layer; and
coating silver or the silver alloy.
